Europäisches Patentamt

European Patent Office

Office européen des brevets

(19)

(11) Veröffentlichungsnummer: **0 123 204**
**B1**

(12) **EUROPÄISCHE PATENTSCHRIFT**

(45) Veröffentlichungstag der Patentschrift:
01.04.87

(51) Int. Cl.⁴: **G 21 C 7/12**

(21) Anmeldenummer: **84104021.5**

(22) Anmeldetag: **10.04.84**

(54) **Kernreaktorregel- und abschaltvorrichtung mit Hubbegrenzung.**

(30) Priorität: **20.04.83 DE 3314353**

(43) Veröffentlichungstag der Anmeldung:
**31.10.84 Patentblatt 84/44**

(45) Bekanntmachung des Hinweises auf die Patenterteilung:
**01.04.87 Patentblatt 87/14**

(84) Benannte Vertragsstaaten:
**DE FR GB IT**

(56) Entgegenhaltungen:
**DE - A - 1 931 108
FR - A - 1 601 569
FR - A - 2 070 797**

(73) Patentinhaber: **INTERATOM Gesellschaft mit
beschränkter Haftung, Friedrich-Ebert-Strasse,
D-5060 Bergisch Gladbach 1 (DE)**

(72) Erfinder: **Mehren, Franz, Entgesbüchel 14,
D-5064 Rösrath (DE)**
Erfinder: **Blombach, Jörg, Dipl.-Ing.,
Giselbertstrasse 35, D-5060 Bergisch-Gladbach (DE)**
Erfinder: **Kretzen, Hans-Hermann, Dr.,
Pfarrer-Maybaum-Weg 75, D-5000 Köln 80 (DE)**

(74) Vertreter: **Mehl, Ernst, Dipl.-Ing. et al, Postfach 22 01 76,
D-8000 München 22 (DE)**

## Beschreibung

Die vorliegende Erfindung betrifft eine Kernreaktorregel- und Abschaltvorrichtung nach dem Oberbegriff des ersten Anspruchs. Derartige Vorrichtungen sind in der Kerntechnik allgemein gebräuchlich und dienen einerseits dazu, durch mehr oder weniger tiefes Einfahren des Absorberstabes in die Spaltzone des Reaktors dessen Reaktivität im gewünschten Leistungsbereich zu halten und andererseits dazu, beim Auftreten anders nicht kontrollierbarer Betriebszustände von dem Antriebsmechanismus gelöst zu werden, so dass sie unter der inhärent sicheren Wirkung der Schwerkraft ganz in die Spaltzone fallen und hier die Kettenreaktion unterbrechen. Für das Verfahren im Regelbereich werden Spindelantriebe bevorzugt und als schnell auslösende Kupplungen zwischen Regelantrieb und Absorberstab haben sich Kupplungen mit Kugeln als Sperrglieder bewährt, die bei Relativverschiebungen zwischen zwei aufeinander gleitenden, mit entsprechenden Ausnehmungen versehenen Hülsen die Last freigeben. Ebenfalls zum Stand der Technik gehören Elektromagnete, die während des Normalbetriebes des Reaktors erregt werden und so einen Anker festhalten, der mit dem die Kupplung steuernden Bauteil in Verbindung steht. Es wird zunächst davon ausgegangen, dass ernsthafte Störungen im Reaktorbetrieb, auch wenn eine Betätigung durch das Bedienungspersonal unterbleibt, zu einer Unterbrechung der Stromzufuhr führen, wodurch sich der Anker vom Elektromagneten lösen und den Abwurf des Absorberstabes einleiten kann.

In Sicherheitsstudien ist unterstellt worden, dass die Abschaltung des Regelantriebes während eines Hubvorganges der Absorberstäbe versagen könnte, so dass diese zu weit aus der Spaltzone herausgefahren werden. Es werden daher Sicherheitsschaltungen vorgesehen, die in einem solchen Falle die Stromzufuhr zu dem die Absorberstabkupplungen im geschlossenen Zustand haltenden Elektromagneten unterbrechen, so dass eine Schnellabschaltung des Reaktors stattfindet. Bei der weiterhin unterstellten Versagensmöglichkeit auch dieser Sicherheitsschaltung tritt unvermeidlicherweise eine Leistungsexkursion des Reaktors mit teilweiser oder vollständiger Zerstörung des Kernes ein. Durch Folgenbegrenzungsmassnahmen (insbesondere Containment) werden die Schäden in der Umgebung auf ein unbedenkliches Mass begrenzt.

Aufgabe der vorliegenden Erfindung ist die Ausgestaltung einer solchen Vorrichtung in der Art, dass eine inhärent sichere Auslösung der Schnellabschaltung auch dann gewährleistet ist, wenn bei einer ausser Kontrolle geratenden Hubbewegung der Absorberstäbe ein Abschalten des Elektromagneten nicht gelingt, so dass eine Kernzerstörung vermieden wird. Dies soll ohne Vergrösserung der bereits benutzten Regel- und Abschaltvorrichtungen geschehen. Der Zeitpunkt der Auslösung der Schnellabschaltung soll dabei an die je nach Abbrandzustand der Spaltzone unterschiedliche Lage und Ausdehnung des normalen Regelbereichs anpassbar sein.

Die Lösung dieser Aufgabe geschieht durch die im kennzeichnenden Teil des ersten Anspruchs angegebenen Mittel. Ein mechanisch zwangsweises Abheben des Ankers vom Elektromagneten führt bereits nach einer Bewegung von wenigen Millimetern zu einer derartigen Abschwächung des Magnetfeldes, dass die Haltekraft nicht mehr ausreicht, der Anker abfällt und die Kupplung des Absorberstabes gelöst wird. Die zur Überwindung der Anziehungskraft des Elektromagneten aufzubringende Kraft wird dabei durch das definitionsgemäss erst die Störung hervorrufende Ereignis geliefert, nämlich die Hubbewegung des Antriebsgestänges.

Durch die im zweiten Anspruch angegebenen Mittel wird eine bevorzugte Ausführungsform der Erfindung gekennzeichnet. Durch die leicht zu bewerkstelligende besondere Ausformung des Schaltgestänges (das mit dem Anker fest verbunden ist) kann dieses über die durch den Anschlag gegebene Begrenzung nicht hinausbewegt werden; bei sich weiterbewegendem Antriebsgestänge tritt zwischen beiden genau diejenige Relativbewegung auf, die zum Auslösen der den Absorberstab haltenden Kupplung führt.

Die im dritten Anspruch vorgeschlagene besondere Ausgestaltung der Erfindung trägt dem oben erwähnten Umstand Rechnung, dass der Begrenzungspunkt, bei dessen Überschreiten durch das Antriebsgestänge die Schnellabschaltung ausgelöst werden soll bei unterschiedlichen Abbrandzuständen der Spaltzone verschieden weit von dieser entfernt liegt.

Bei einer Ausgestaltung der Erfindung entsprechend dem Anspruch 4 wird bei nur unwesentlich gesteigertem Aufwand die Möglichkeit eröffnet, eine sich trotz normaler Einleitung der Schnellabschaltung nicht öffnende (etwa verklemmte) Kupplung zwangsweise zu öffnen. Dieser Vorgang kann durch das Bedienungspersonal des Reaktors nach Erkennen der Störung in der Kupplung noch so rechtzeitig eingeleitet werden, dass schwerere Beschädigungen der Spaltzone verhindert werden.

Ein Ausführungsbeispiel der Erfindung ist in der Zeichnung dargestellt, und zwar zeigt

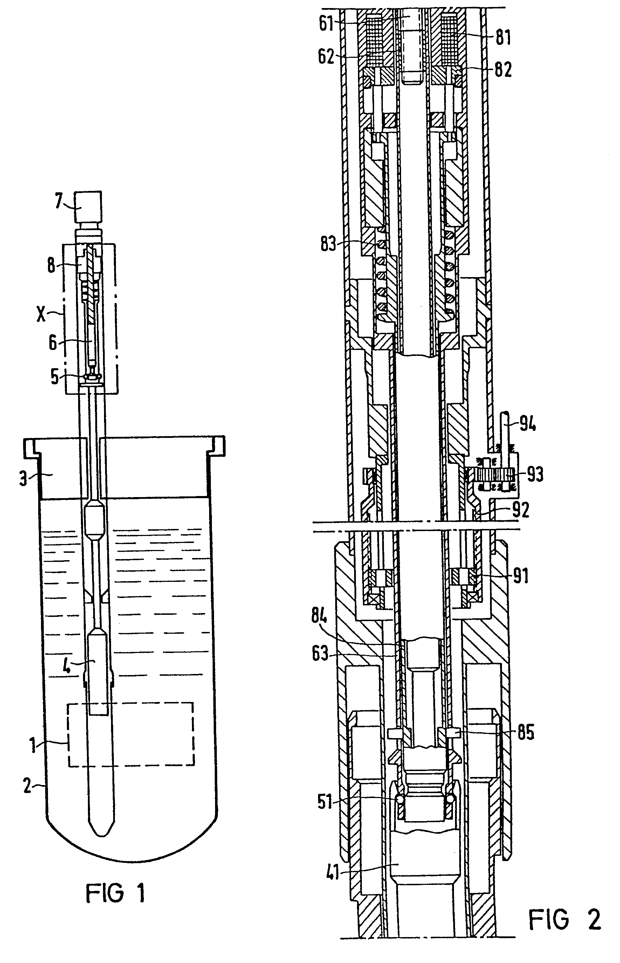

Fig. 1 schematisch und ohne Anspruch auf genaue Proportionen die für das Verständnis der vorliegenden Erfindung wesentlichen Teile eines Kernreaktors und

Fig. 2 in vergrössertem Massstab die Einzelheit X der Fig. 1.

Eine Spaltzone 1 ist im Inneren eines mit einem flüssigen Kühlmittel gefüllten Kernreaktorbehälters 2 angeordnet, der mit einem Deckel 3 verschlossen ist. Im Deckel 3 sind mehrere Regel- und Abschaltvorrichtungen angeordnet, von denen hier nur eine, der Deutlichkeit halber übertrieben gross dargestellt ist. Sie besteht im wesentlichen aus einem neutronenabsorbierendes Material enthaltenden eigentlichen Absorberstab 4, der über ein Gestänge 41 an einer mechanischen Kupplung 5 aufgehängt ist. Durch einen Spindelantrieb 6, der durch einen in der einen wie der anderen Drehrichtung laufenden Motor 7 in Bewegung gesetzt werden kann, wird der Absorberstab 4 entsprechend den jeweiligen Betriebsbedingungen mehr oder weniger tief in die Spaltzone 1 eingefahren. Um diese im Notfall schnell ganz abschalten zu können, kann die Kupplung 5 durch das Lösen einer elektromagnetischen Haltevorrichtung 8 geöffnet werden, worauf der Absorberstab 4 in die Spaltzone 1 hineinfällt. Der Absorberstab 4 hängt mit seinem mit einer entsprechenden Hinterdrehung versehenen Gestänge 41 auf Sperrkugeln 51, die durch die Wirkung eines rohrförmigen Schaltgestänges 84 in radialen Bohrungen eines ebenfalls rohrförmigen Antriebsgestänges 63 gehalten werden. Das Antriebsgestänge 63 steht über eine gegen Verdrehung gesicherte Mutter 62 mit der Spindel 61 des Antriebs 6 im Eingriff und kann so nach Bedarf in Bezug auf den Reaktordeckel 3 auf- und niedergefahren werden. Das Schaltgestänge weist eine Eindrehung auf, in die die Sperrkugeln 51 zurücktreten können, sobald das Schaltgestänge relativ zum Antriebsgestänge 63 axial verschoben wird. Dann wird das Gestänge 41 nicht mehr festgehalten und der Absorber 4 wird unter der Wirkung der Schwerkraft (unter Umständen unterstützt durch die Wirkung von hier nicht gezeigten Federn) abwärts beschleunigt. Das Schaltgestänge 84 ist an seinem oberen Ende mit einem Magnetanker 82 verbunden, der im Normalbetrieb an einem erregten Elektromagneten 81 anliegt. Wird der Elektromagnet 81 durch eine absichtliche oder unabsichtliche Unterbrechung der Stromzufuhr entregt, so wird der Anker 82 unter der Wirkung der Schwerkraft und der einer gespannten, sich einerseits am Antriebsgestänge 63 und andererseits am Schaltgestänge 84 abstützenden Feder 83 abfallen, wodurch die zur Auslösung der Kupplung 5 erforderliche Längsverschiebung von Schaltgestänge 84 zu Antriebsgestänge 63 erfolgt. Lässt sich eine Hubbewegung der Vorrichtung infolge einer beliebigen Fehlfunktion nicht stoppen, so laufen schliesslich am Schaltgestänge 84 angebrachte Nocken 85, die durch zu diesem Zweck angebrachte Schlitze im Antriebsgestänge 63 hindurchgreifen gegen einen Anschlagring 91. Die Aufwärtsbewegung des Schaltgestänges 84 wird so gestoppt und bei weiterlaufender Hubspindel 61 wird das Antriebsgestänge mitsamt dem daran befestigten Elektromagneten 81 weiter nach oben gefahren. An sich ist dieser durch eine hier nicht gezeigte Sicherheitsschaltung bereits vorher entregt worden; ist dies infolge einer weiteren unterstellten Fehlfunktion im Sicherheitssystem nicht geschehen, so reicht die durch den Antrieb 7 aufgebrachte Kraft aus, um die Anziehungskraft zwischen Magnet 81 und Anker 82 zu überwinden, so dass letzterer schliesslich abfällt und die Kupplung 5 geöffnet wird. Der Anschlagring 91 ist an seiner Aussenseite mit Gewinde versehen und in Bezug auf den Reaktor unverdrehbar in eine Hohlspindel 92 eingeschraubt. Diese kann über einen Zahnradtrieb 93 vermittels einer Antriebswelle 94 in Drehung versetzt werden, wobei sich der Anschlagring 91 in Bezug auf den Reaktor höher oder niedriger stellen lässt. Am Anfang des Lebenszyklus einer Spaltzone, zu dem der Absorber 4 auch während des normalen Reaktorbetriebes noch verhältnismässig weit in dieselbe eingefahren werden muss, wird sich eine wie in der Zeichnung dargestellt, niedrige Stellung des Anschlagringes 91 empfehlen, um die zwangsweise Auslösung der Kupplung 5 bereits bei einem verhältnismässig geringen Hub zu bewerkstelligen. Entsprechend dem fortschreitenden Abbrand in der Spaltzone und dem sich damit nach oben verschiebenden Regelbereich des Absorberstabes 4 wird durch gelegentliches Nachstellen über die Antriebswelle 94 der Anschlagring 91 nach und nach nach oben verfahren. Mittels der Antriebswelle 94 kann der Anschlagring 91 auch wieder hinunter gefahren werden, um beim Auftreffen auf die Nocken 85 eine etwa verklemmte Kupplung 5 gewaltsam zu öffnen.

**Patentansprüche**

1. Kernreaktorregel- und Abschaltvorrichtung bestehend aus einem neutronenabsorbierendes Material enthaltenden Absorberstab (4), der mittels einer durch axiales Verschieben eines Schaltgestänges (84) lösbaren Kupplung (5) im Betrieb mit einem in Axialrichtung zwischen zwei Endlagen verfahrbaren Antriebsgestänge (63) verbunden ist, wobei das Schaltgestänge an seinem entgegengesetzten Ende mit dem Anker (82) eines im Antriebsgestänge (63) angeordneten Elektromagneten (81) verbunden ist, dadurch gekennzeichnet, dass durch die Bewegung des Antriebsgestänges (63) über die von der Spaltzone (1) des Reaktors abgewandte Endlage hinaus auf den Anker (82) eine der Anziehungskraft des Magneten (81) entgegengesetzte und diese übersteigende Kraft aufbringbar ist.

2. Vorrichtung nach Anspruch 1, dadurch gekennzeichnet, dass das Schaltgestänge (84) Nocken (85) aufweist, die beim Erreichen der Endlage gegen einen ortsfesten Anschlag (91) laufen.

3. Vorrichtung nach Anspruch 2, dadurch gekennzeichnet, dass die Lage des Anschlags (91) in Bezug auf die Spaltzone (1) veränderbar ist.

4. Vorrichtung nach Anspruch 3, dadurch gekennzeichnet, dass der Anschlag (91) in Bezug auf den Reaktor unverdrehbar in eine Hohlspindel (92) eingeschraubt ist, die mittels eines Hilfsantriebes (92, 93) drehbar ist.

**Revendications**

1. Dispositif de réglage et d'arrêt de réacteur nucléaire, constitué d'une barre d'absorbeur (4) contenant une matière absorbant les neutrons et reliée en fonctionnement, au moyen d'un dispositif d'accouplement (5) pouvant être désaccouplé par un coulissement axial d'une tringle d'arrêt (84), à une tringle d'entraînement (63) susceptible d'être déplacée en direction axiale entre deux positions d'extrémité, l'extrémité opposée de la tringle d'arrêt étant reliée à l'armature (82) d'un électroaimant (81) disposé dans la tringle d'entraînement (63), caractérisé en ce qu'une force opposée à la force d'attraction de l'aimant (81) et de plus grande intensité que celle-ci peut être appliquée à l'armature (82) par le déplacement de la tringle d'entraînement (63) au-dessus de la position d'extrémité éloignée de la zone active (1) du réacteur.

2. Dispositif suivant la revendication 1, caractérisé en ce que la tringle d'arrêt (84) présente des parties en saillie (85) qui viennent, lorsque la position d'extrémité est atteinte, sur une butée (91) fixe.

3. Dispositif suivant la revendication 2, caractérisé en ce que la position de la butée (91) peut être modifiée par rapport à la zone active (1).

4. Dispositif suivant la revendication 3, caractérisé en ce que la butée (91) est vissée sans possibilité de tourner par rapport au réacteur, dans une broche creuse (92) qui peut tourner au moyen d'un dispositif d'entraînement auxiliaire (92, 93).

## Claims

1. A nuclear reactor control and shut-down device consisting of an absorber rod (4) which contains a neutron-absorbing material and which during operation is connected to a driving linkage (63), which can be moved in the axial direction between two end positions, by means of a coupling (5) which can be released by axially displacing a switching linkage (84), where the switching linkage is connected to the armature (82) of an electromagnet (81), which is arranged in the driving linkage (63), at its opposite end, characterised in that by means of the movement of the driving linkage (63), beyond the end position away from the active zone (1) of the reactor, a force which is opposed to the attractive force of the magnet (81) and exceeds the latter, can be applied onto the armature (82).

2. A device as claimed in Claim 1, characterised in that the switching linkage (84) has cams (85) which upon reaching the end position run against a stationary stop (91).

3. A device as claimed in Claim 2, characterised in that the position of the stop (91) is changeable in relation to the active zone (1).

4. A device as claimed in Claim 3, characterised in that the stop (91) is non-rotatable in relation to the reactor, and is screwed into a hollow spindle (92), which is rotatable by means of an auxiliary drive (92, 93).

FIG 1

FIG 2